# EUROPEAN PATENT APPLICATION

(11) **EP 3 882 280 A1**
(43) Date of publication of application: **22.09.2021**
(21) Application number: 19884833.5
(22) Date of filing: 14.11.2019
(51) Int. Cl.: C08F 4/659, C08F 4/6592, C08F 4/52, C08F 2/38

(54) **SUPPORTED CATALYST FOR OLEFIN POLYMERIZATION, AND METHOD FOR PREPARING POLYOLEFIN BY USING SAME**

(30) Priority: 14.11.2018 KR 20180140221; 30.08.2019 KR 20190107227
(71) Applicant: Lotte Chemical Corporation, Seoul, 05551 (KR)
(72) Inventor: MIN, Joon Keun, Daejeon 34110 (KR); LEE, Hae In, Daejeon 34110 (KR); LEE, Rai Ha, Daejeon 34110 (KR); SHIN, Eun Hye, Daejeon 34110 (KR); JEONG, Su Jeong, Daejeon 34110 (KR); CHAE, Byung Hun, Daejeon 34110 (KR)
(74) Representative: Germain Maureau
(86) International application number: PCT/KR2019/015492
(87) International publication number: WO 2020/101372

(57) **Abstract**

The present invention relates to a supported catalyst for olefin polymerization, and a method for preparing a polyolefin by using same, the supported catalyst comprising: a main catalyst comprising a metallocene-based compound; a cocatalyst comprising an organoaluminum-based compound; an aromatic compound in which two or more polar groups selected from a hydroxyl group (-OH), an amine group (-NH₂), a thiol group (-SH), a carboxyl group (-COOH) and an amide group (-CONH₂) are bonded, and one or more halogen groups are bonded; and a support for supporting the main catalyst, the cocatalyst and the aromatic compound. When olefins are polymerized by using the supported catalyst of the present invention, the catalyst exhibits excellent activity and fouling can be reduced by inhibiting the generation of polyolefin fine powder.

## Description

### [Technical Field]

This application claims priority to and the benefit of Korean Patent Application No. 10-2018-0140221, filed on November 14, 2018, and Korean Patent Application No. 10-2019-0107227, filed on August 30, 2019, the disclosures of which are incorporated herein by reference in their entirety.

The present invention relates to a supported catalyst for olefin polymerization and a method of producing a polyolefin using the same, and more particularly, to a supported catalyst for olefin polymerization which, due to including a main catalyst, a cocatalyst, and an aromatic compound including a specific substituent, has excellent catalytic activity and enables the production of a polyolefin without generating fine powder, and a method of producing a polyolefin using the same.

### [Background Art]

In a process of producing a polyolefin by polymerizing or copolymerizing olefin monomers, various catalyst compounds are used to achieve higher reaction efficiency and produce a polymer having desired properties. Catalysts used in the polymerization of a polyolefin can be classified into Ziegler-Natta-based catalysts and metallocene-based catalysts, and these two groups of highly active catalysts have evolved while developing their respective characteristics.

In general, metallocene catalysts are homogeneous catalysts having a single catalytic active site. Therefore, metallocene catalysts have a narrower polymer molecular-weight distribution and a more uniform comonomer composition distribution than Ziegler-Natta catalysts and, by having variously modified ligand structures and the like, can help to produce polymers with various properties.

One of the major research interests related to metallocene catalysts is a technique of producing a high molecular weight polyolefin. However, most catalyst systems capable of producing high molecular weight products have the disadvantage of a complex ligand synthesis process and, unless process conditions are properly controlled, the disadvantage of low polymerization activity. Therefore, as a means to increase the activity of metallocene catalysts, cocatalysts and the like have been used, and catalyst-supporting conditions, additives, and the like have been controlled.

For example, Patent Document 1 (Korean Laid-Open Patent Application No. 10-2011-0043464) discloses a method of producing a supported metallocene catalyst, which includes: supporting a portion of a cocatalyst on a carrier at a first temperature; additionally supporting a remaining portion of the cocatalyst on the carrier at a second temperature lower than the first temperature; supporting a first metallocene compound on the carrier; and supporting a second metallocene compound on the carrier. Patent Document 1 is directed to improving catalytic activity by supporting an excessive amount of metallocene compounds and a cocatalyst. However, when an olefin was polymerized using the supported catalyst produced by the above-described method, a large amount of fine powder was generated, which resulted in fouling.

Another related-art document, Patent Document 2 (Korean Laid-Open Patent Application No. 10-2011-0053546), discloses a metallocene supported catalyst composition in which a group 4 transition metal compound is supported on a carrier sequentially treated with an amine group-containing silane compound and an ionic compound. This method improved processing problems such as fouling, but had limitations in improving catalytic activity because the transition metal compound was not effectively supported and the content of the metallocene metal component in the carrier was low.

### [Related-Art Documents]

### [Patent Documents]

(Patent Document 1) KR1020110043464 A
(Patent Document 2) KR1020110053546 A

### [Disclosure]

### [Technical Problem]

The present invention is directed to providing a supported catalyst which, due to including an aromatic compound in which two or more polar groups having an unshared electron pair and one or more halogen groups are bonded in addition to a main catalyst and a cocatalyst, has excellent catalytic activity and enables the production of a polyolefin without generating fine powder.

In addition, the present invention is directed to providing a method of producing a polyolefin using the above-described supported catalyst.

### [Technical Solution]

One aspect of the present invention provides a supported catalyst for olefin polymerization, which includes: a main catalyst including a metallocene-based compound; a cocatalyst including an organic aluminum-based compound; an aromatic compound in which two or more polar groups selected from among a hydroxyl group (-OH), an amine group (-NH₂), a thiol group (-SH), a carboxyl group (-COOH), and an amide group (-CONH₂) and one or more halogen groups are bonded; and a carrier for supporting the main catalyst, the cocatalyst, and the aromatic compound.

Another aspect of the present invention provides a method of producing a polyolefin, which includes polymerizing an olefin in the presence of the above-described supported catalyst.

### [Advantageous Effects]

According to the present invention, it is possible to provide a supported catalyst which, due to including an aromatic compound in which two or more polar groups such as a hydroxyl group (-OH), an amine group (-NH₂), a thiol group (-SH), a carboxyl group (-COOH), and an amide group (-CONH₂) and one or more halogen groups are bonded in addition to a main catalyst and a cocatalyst, is in a state in which the main catalyst and the cocatalyst are effectively supported on a carrier.

When an olefin is polymerized using this supported catalyst, excellent catalytic activity is exhibited, and a fouling phenomenon can be improved because the generation of polyolefin fine powder is suppressed.

### [Best Mode]

Hereinafter, the present invention will be described in detail.

In the present specification, when it is stated that a part "includes" a particular component, this does not preclude the possibility of including other components, and means that the other components may additionally be included unless specifically stated to the contrary.

In the present specification, the term "substitution" means the replacement of a carbon atom of a compound by a substituent, and the position at which the substitution occurs is not limited as long as it is a position where a hydrogen atom that can be substituted is present, that is, a position that can be substituted with a substituent, and when two or more hydrogen atoms are substituted by two or more substituents, the two or more substituents may be the same or different.

In the present specification, the term "group 4 transition metal" refers to titanium (Ti), zirconium (Zr), or hafnium (Hf).

In the present specification, "halogen group" refers to fluorine (F), chlorine (Cl), bromine (Br), or iodine (I).

In addition, the term "alkyl group" described in the present specification refers to a monovalent linear, branched, or cyclic saturated hydrocarbon group consisting only of carbon and hydrogen atoms and may be a methyl group, an ethyl group, a propyl group, an isopropyl group, a butyl group, an isobutyl group, a t-butyl group, a pentyl group, a hexyl group, an octyl group, a dodecyl group, a cyclopropyl group, a cyclobutyl group, a cyclopentyl group, a cyclohexyl group, a cycloheptyl group, a cyclooctyl group, a cyclononyl group, a cyclodecyl group, or the like, but the present invention is not limited to.

In addition, the term "alkenyl group" described in the present specification refers to a linear or branched hydrocarbon group including one or more carbon-carbon double bonds and may be a methyl group, an ethenyl group, a propenyl group, a butenyl group, a pentenyl group, a hexenyl group, a heptenyl group, an octenyl group, a nonenyl group, a decenyl group, an undecenyl group, a dodecenyl group, or the like, but the present invention is are not limited thereto.

In addition, the term "alkynyl group" described in the present specification refers to a hydrocarbon group including one or more carbon-carbon triple bonds and may be a methenyl group, an ethynyl group, a propynyl group, a butynyl group, a pentynyl group, a hexynyl group, a heptynyl group, an octynyl group, or the like, but the present invention is not limited thereto.

In addition, the term "aryl group" described in the present specification refers to an organic group derived from an aromatic hydrocarbon by removal of one hydrogen and includes a monocyclic group or a fused-ring group. Specific examples of the aryl group include a phenyl group, a naphthyl group, a biphenyl group, an anthryl group, a fluorenyl group, a phenanthryl group, a triphenylenyl group, a pyrenyl group, a perylenyl group, a chrysenyl group, a naphthacenyl group, a fluoranthenyl group, and the like, but the present invention is not limited thereto.

In addition, the term "alkylaryl group" described in the present specification refers to an organic group in which one or more hydrogen atoms of an aryl group have been substituted by an alkyl group and may be a methylphenyl group, an ethylphenyl group, a n-propylphenyl group, an isopropylphenyl group, a n-butylphenyl group, an isobutylphenyl group, a t-butylphenyl group, or the like, but the present invention is not limited thereto.

In addition, the term "arylalkyl group" described in the present specification refers to an organic group in which one or more hydrogen atoms of an alkyl group have been substituted by an aryl group and may be a phenylpropyl group, a phenylhexyl group, or the like, but the present invention is not limited thereto.

In the present specification, examples of the "alkylaryl group" and the "arylalkyl group" may be the same as the examples given for the alkyl group and the aryl group in the above, but are not limited thereto.

In addition, as described in the present specification, the term "amido group" refers to an amino group (-NH₂) bonded to a carbonyl group (C=O), the term "alkylamido group" refers to an organic group in which one or more hydrogen atoms of -NH₂ of an amido group have been substituted by an alkyl group, and the term "arylamido group" refers to an organic group in which one or more hydrogen atoms of -NH₂ of an amido group have been substituted by an aryl group. Examples of the alkyl group of the alkylamido group and the aryl group of the arylamido group may be the same as the examples given for the alkyl group and the aryl group in the above, but the present invention is not limited thereto.

In addition, the term "alkylidene group" described in the present specification refers to a divalent aliphatic hydrocarbon group in which two hydrogen atoms have been removed from the same carbon atom of an alkyl group and may be an ethylidene group, a propylidene group, an isopropylidene group, a butylidene group, a pentylidene group, or the like, but the present invention is not limited thereto.

In the present specification, "alkylene group" refers to a divalent atomic group resulting from removing, from a saturated aliphatic hydrocarbon, two hydrogen atoms bonded to two different carbon atoms of the saturated aliphatic hydrocarbon, and may be a methylene group, an ethylene group, a propylene group, a butylene group, or the like, but the present invention is not limited thereto.

In the present specification, "acetal group" refers to an organic group formed by the bonding between an alcohol and an aldehyde, that is, a substituent having two ether (-OR) bonds on one carbon atom and may be a methoxymethoxy group, a 1-methoxyethoxy group, a 1-methoxypropyloxy group, a 1-methoxybutyloxy group, a 1-ethoxyethoxy group, a 1-ethoxypropyloxy group, a 1-ethoxybutyloxy group, a 1-(n-butoxy)ethoxy group, a 1-(isobutoxy)ethoxy group, a 1-(secondary butoxy)ethoxy group, a 1-(tertiary butoxy)ethoxy group, a 1-(cyclohexyloxy)ethoxy group, a 1-methoxy-1-methylmethoxy group, a 1-methoxy-1-methylethoxy group, or the like, but the present invention is not limited thereto.

In the present specification, "ether group" refers to an organic group having one or more ether bonds (-O-) and may be a 2-methoxyethyl group, a 2-ethoxyethyl group, a 2-butoxyethyl group, a 2-phenoxyethyl group, a 2-(2-methoxyethoxy)ethyl group, a 3-methoxypropyl group, a 3-butoxypropyl group, a 3-phenoxypropyl group, a 2-methoxy-1-methyl ethyl group, a 2-methoxy-2-methyl ethyl group, a 2-methoxyethyl group, a 2-ethoxyethyl group, a 2-butoxyethyl group, a 2-phenoxyethyl group, or the like, but the present invention is not limited thereto.

In the present specification, "silyl group" refers to a -SiH₃ radical derived from silane, and one or more hydrogen atoms of the silyl group may be substituted by various organic groups such as an alkyl group, a halogen group, or the like. Specific examples of the silyl group include a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group, and the like, but the present invention is not limited thereto.

In the present specification, "hydrocarbyl" refers to a monovalent organic radical formed by removing a hydrogen atom from a hydrocarbon group consisting only of carbon and hydrogen atoms, such as an alkyl group, an aryl group, an alkylaryl group, an arylalkyl group, or the like, regardless of the structure, and examples thereof may be the same as the examples given for the organic groups above, but the present invention is not limited thereto.

In the present specification, "group 13 element" refers to boron (B), aluminum (Al), gallium (Ga), indium (In), or thallium (TI).

In the present specification, "group 14 element" refers to carbon (C), silicon (Si), or germanium (Ge).

In the present specification, when it is stated that two or more groups form a ring by being bonded to each other, it may mean that alkylenes unsubstituted or substituted with a hydrocarbon or hetero ring or alkenylenes unsubstituted or substituted with a hydrocarbon or hetero ring form a ring by being bonded to each other.

The present inventors completed the present invention based on their findings that when a supported catalyst includes a main catalyst, a cocatalyst, and an aromatic compound in which two or more polar groups having unshared electron pair(s) (e.g., a hydroxyl group (-OH), an amine group (-NH₂), a thiol group (-SH), a carboxyl group (-COOH), and an amide group (-CONH₂)) and one or more halogen groups are bonded, since catalyst components are effectively supported on a carrier, high activity is exhibited during olefin polymerization, and a fouling phenomenon can be improved because the generation of fine powder is suppressed.

Hereinafter, the present invention will be described in detail.

One aspect of the present invention provides a supported catalyst for olefin polymerization, which includes: a main catalyst including a metallocene-based compound; a cocatalyst including an organic aluminum-based compound; an aromatic compound in which two or more polar groups selected from among a hydroxyl group (-OH), an amine group (-NH₂), a thiol group (-SH), a carboxyl group (-COOH), and an amide group (-CONH₂) and one or more halogen groups are bonded; and a carrier for supporting the main catalyst, the cocatalyst, and the aromatic compound.

As described above, the aromatic compound is a compound including two or more polar groups and one or more halogen groups. In the case of a supported catalyst in which an aromatic compound including less than two polar groups is supported, since catalyst components are liberated from a carrier during olefin polymerization, a large amount of polyolefin fine powder is generated. In addition, a supported catalyst including an aromatic compound not including a halogen group has the problem of low activity.

Specifically, the polar groups bonded to the aromatic compound enable catalyst components to be strongly supported on a carrier and may thereby help to suppress the generation of fine powder. The unshared electron pairs included in the polar groups form a coordination bond or covalent bond between the carrier and a main catalyst and between the carrier and a cocatalyst and thereby help the catalyst components to be strongly supported and allow the catalyst components to be effectively supported on the carrier. In particular, when a combination of an alkylaluminum and an alkylaluminoxane is used as a cocatalyst, the two or more polar groups in the aromatic compound function as a bridge between the alkylaluminum and the alkylaluminoxane and thereby prevent the alkylaluminoxane from being separated from the carrier. Accordingly, the metallocene-based compound bonded to the alkylaluminoxane by catalytic activation during olefin polymerization can also be strongly supported on the carrier. Moreover, the aromatic compound serves to prevent catalyst dimerization by increasing gaps between the catalysts.

In addition, the halogen group bonded to the aromatic compound helps improve catalytic activity. Specifically, a Brønsted acid aromatic compound substituted with a halogen group, which is formed by a reaction with a cocatalyst such as an aluminum or an alkylaluminoxane, serves to increase the activation of the catalyst. Accordingly, the supported catalyst including the aromatic compound can have higher catalytic activity than other supported catalysts in which a metallocene compound with a similar metal component and a cocatalyst with a similar aluminum content are supported on a carrier.

According to one exemplary embodiment of the present invention, the aromatic compound may include one or more compounds represented by Chemical Formulas 1 to 3 below.

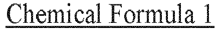

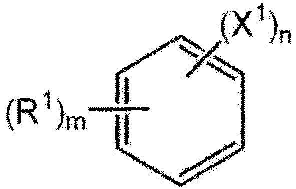

In Chemical Formula 1,
n is an integer of 2 or more, m is an integer of 1 or more,
X¹s are the same or different, and are each independently: a hydroxyl group (-OH); an amine group (-NH₂); a thiol group (-SH); a carboxyl group (-COOH); or an amide group (-CONH₂), and
one or more selected from among R¹s are halogen groups, and the remaining R¹s are the same or different and are each independently: hydrogen; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group,

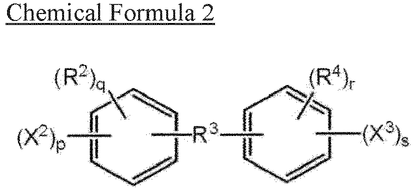

In Chemical Formula 2,
each of p, q, r, and s is an integer of 1 or more,
X²s and X³s are the same or different, and are each independently: a hydroxyl group (-OH); an amine group (-NH₂); a thiol group (-SH); a carboxyl group (-COOH); or an amide group (-CONH₂),
one or more selected from among R²s and R⁴s are halogen groups, and the remaining R²s and R⁴s are the same or different, and are each independently: hydrogen; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group, and
R³ is: a direct linkage; or an unsubstituted or substituted alkylene group,

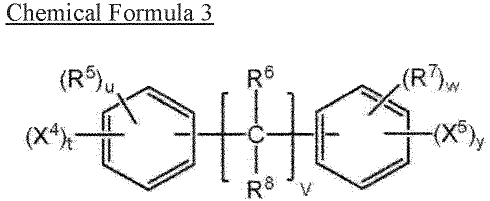

In Chemical Formula 3,
each of t, u, v, w, and y is an integer of 1 or more,
X⁴s and X⁵s are the same or different, and are each independently: a hydroxyl group (-OH); an amine group (-NH₂); a thiol group (-SH); a carboxyl group (-COOH); or an amide group (-CONH₂),
R⁵s and R⁷s are the same or different, and are each independently: hydrogen; a halogen group; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group, and
one or more selected from among R⁶s and R⁸s are: a halogen group; or a linear or branched (C₁-C₂₀) alkyl group substituted with one or more halogen groups, and the remaining R⁶s and R⁸s are: hydrogen; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group.

Here, the polyfunctional aromatic compounds represented by Chemical Formulas 2 and 3 may have a bilateral symmetry about -R³- and -C-, respectively.

According to one exemplary embodiment of the present invention, the one or more selected from among R¹s may be fluorine (F), the one or more selected from among R²s and R⁴s may be fluorine (F), and the one or more selected from among R⁶s and R⁸s may be fluorine (F). As such, in the case of an aromatic compound having a fluorine substituent, the formation of a Brønsted acid can more actively proceed through a reaction with an alkylaluminum and an alkylaluminoxane, and therefore, a supported catalyst having high activity can be provided.

According to one exemplary embodiment of the present invention, the aromatic compound may include one or more compounds represented by Chemical Formulas 4 to 6 below. An aromatic compound having this structure can help catalyst components to be strongly supported because two unshared electron pairs of oxygen or nitrogen included in the compound form a coordination bond or covalent bond between a carrier and a main catalyst, and between a carrier and a cocatalyst. Accordingly, when an olefin is polymerized using a supported catalyst including such a compound, the generation of fine powder can be suppressed.

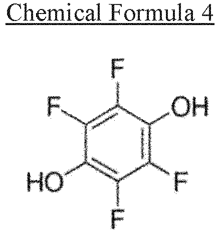

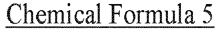

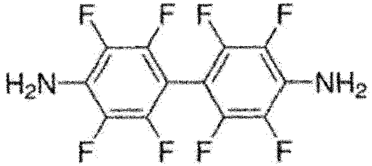

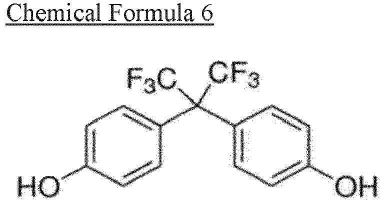

According to one exemplary embodiment of the present invention, the cocatalyst may include one or more among: a compound including a unit represented by Chemical Formula 7 below; and a compound represented by Chemical Formula 8 below.

Chemical Formula 7 **-[Al(Ra)-O]_{b}-**

In Chemical Formula 7,
b is an integer of 2 or more,
Al is aluminum,
O is oxygen, and
Ra is: a halogen group; or a (C₁-C₂₀) hydrocarbyl group unsubstituted or substituted with a halogen group,

   Chemical Formula 8 **Q(Rb)₃**

In Chemical Formula 8,
Q is: aluminum; or boron, and
Rbs are the same or different, and are each independently: a halogen group; or a (C₁-C₂₀) hydrocarbyl group unsubstituted or substituted with a halogen group.

The cocatalyst compound is included in a catalyst composition along with a metallocene-based compound and serves to activate the metallocene-based compound. Specifically, to help the metallocene-based compound become an active catalyst component applicable to the polymerization of an olefin, a compound having the unit represented by Chemical Formula 7, which is capable of extracting ligands (Q¹Q²) from the metallocene-based compound and thus cationizing the central metal (M) and is capable of functioning as a counterion (i.e., anion) having weak bonding strength, and a compound represented by Chemical Formula 8 work, as cocatalysts, with the metallocene-based compound.

The compound having the "unit" represented by Chemical Formula 7 has a structure in which a structure enclosed in [] is connected n times in the compound, and as long as the compound includes the unit represented by Chemical Formula 7, the structure of the remaining part of the compound is not particularly limited, and the compound may have a cluster form in which repeat units represented by Chemical Formula 7 are connected, and for example, the compound may be a spherical compound.

According to one exemplary embodiment of the present invention, the cocatalyst may include an alkylaluminoxane and an alkylaluminum. As such, when the two components are used as a cocatalyst, higher catalytic activity can be attained. In addition, due to the interaction of the alkylaluminum and the alkylaluminoxane with the aromatic compound, the alkylaluminoxane can be more strongly supported on the carrier, and thus the metallocene compound can be stably activated during olefin polymerization.

According to one exemplary embodiment of the present invention, the alkylaluminoxane may include one or more selected from the group consisting of methylaluminoxane, ethylaluminoxane, isobutylaluminoxane, and butylaluminoxane, and in consideration of the activity of the metallocene-based compound, methylaluminoxane may be used.

According to one exemplary embodiment of the present invention, the alkylaluminum may include one or more selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide, and dimethylaluminum ethoxide. In consideration of the activity of the metallocene-based compound, one or more selected from the group consisting of trimethylaluminum, triethylaluminum, and triisobutylaluminum may be used.

As the carrier, an inorganic material or organic material used in the production of a catalyst in the technical field to which the present invention pertains may be used without limitation. Specifically, the carrier may be a finely pulverized inorganic solid carrier selected from talc, clay, silica, alumina, silica-alumina, magnesium chloride, or a combination thereof, or a particulate resin carrier such as spherical, particulate, or finely pulverized polyethylene, polyvinyl chloride, or polystyrene.

To be bonded with the other components of the supported catalyst, the carrier may have a reactive polar group. For example, the polar group may include a -OH group, a -NH group, a -SH group, a heteroatom-containing highly-strained ring (e.g., ring obtained from a carrier material calcined at high temperature (600 to 1,000 °C), such as a four-element -Si-O-Si-O- ring), a carbonyl group, a carbon-carbon double bond, or the like, but the present invention is not limited thereto. The polar group included in the carrier forms an International Union of Pure and Applied Chemistry (IUPAC) standard sigma bond in a reaction with a catalytic material or aromatic compound.

The particle diameter of the carrier may be 0.1 µm or more and 600 µm or less and specifically 0.3 µm or more and 100 µm or less. The surface area of the carrier may be 50 m²/g or more and 1,000 m²/g or less and specifically 100 m²/g or more and 500 m²/g or less. In addition, the pore volume of the carrier may be 0.3 cc/g or more and 5.0 cc/g or less and specifically 0.5 cc/g or more and 3.5 cc/g or less, and the pore diameter of the carrier may be 50 Å or more and 500 Å or less.

According to one exemplary embodiment of the present invention, the metallocene-based compound may be represented by Chemical Formula 9 below.

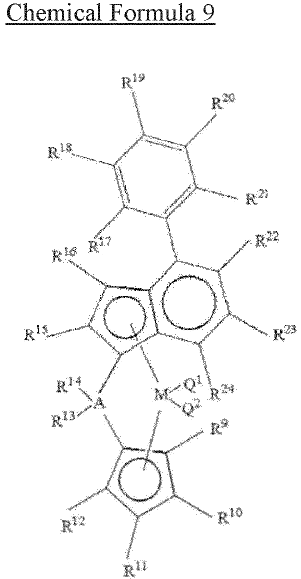

In Chemical Formula 9,
M is a group 4 transition metal,
Q¹ and Q² are the same or different, and are each independently: a halogen group; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group,
A is a group 14 element,
R⁹, R¹⁰, R¹¹, R¹² , R¹⁷ , R¹⁸ , R¹⁹ , R²⁰, R²¹, R²², R²³, and R²⁴ are the same or different, and are each independently: hydrogen; a (C₁-C₂₀) alkyl group unsubstituted or substituted with an acetal group or ether group; a (C₂-C₂₀) alkenyl group unsubstituted or substituted with an acetal group or ether group; a (C₁-C₂₀) alkyl (C₆-C₂₀) aryl group unsubstituted or substituted with an acetal group or ether group; a (C₆-C₂₀) aryl (C₁-C₂₀) alkyl group unsubstituted or substituted with an acetal group or ether group; or a (C₁-C₂₀) silyl group unsubstituted or substituted with an acetal group or ether group,
two or more groups among R⁹, R¹⁰, R¹¹, and R¹² may form an aliphatic ring or aromatic ring by being bonded to each other,
two or more groups among R¹⁷, R¹⁸, R¹⁹, R²⁰, R²¹, R²², R²³, and R²⁴ may form an aliphatic ring or aromatic ring by being bonded to each other, and
R¹³, R¹⁴, R¹⁵, and R¹⁶ are the same or different, and are each independently: hydrogen; a (C₁-C₂₀) alkyl group unsubstituted or substituted with an acetal group or ether group; a (C₂-C₂₀) alkenyl group unsubstituted or substituted with an acetal group or ether group; or a (C₁-C₂₀) alkyl (C₆-C₂₀) aryl group unsubstituted or substituted with an acetal group or ether group.

The metallocene-based compound represented by Chemical Formula 9 has an ansa-metallocene structure in which a cyclopentadienyl ligand and an indenyl ligand are connected to each other by a bridging group including an element in group 14 of the periodic table.

According to one exemplary embodiment of the present invention, A may be carbon (C) or silicon (Si), and R¹³ and R¹⁴ may each independently be hydrogen or a methyl group. In Chemical Formula 9, -AR¹³R¹⁴- functions as a bridge between two ligands, and since the two ligands are linked by -AR¹³R¹⁴-, excellent stability is attained.

According to one exemplary embodiment of the present invention, Q¹ and Q² may each independently be: a halogen group selected from among F, Cl, Br, and I; a methyl group; or an ethyl group. Here, the methyl group and the ethyl group may be unsubstituted or substituted with an acetal group or ether group. In addition, in the metallocene-based compound represented by Chemical Formula 9, M which is bonded to Q¹Q² and positioned between these two ligands may be: Ti, Zr, or Hf; Zr or Hf; or Zr.

Meanwhile, as a method of supporting the main catalyst, the cocatalyst, and the aromatic compound on the carrier, any method used in the technical field to which the present invention pertains for supporting a main catalyst, a cocatalyst, and an aromatic compound on the carrier may be used without limitation. For example, a method of directly supporting the main catalyst, the cocatalyst, and the aromatic compound on the carrier, which is in a dehydrated state, a method of pretreating the carrier with the cocatalyst compound and then sequentially supporting the aromatic compound and the main catalyst, a method of sequentially supporting the main catalyst and the aromatic compound on the carrier and then post-treating with the cocatalyst, a method of reacting the main catalyst, the cocatalyst, and the aromatic compound and then carrying out a reaction by adding the carrier, or the like may be used.

A solvent used in the method of supporting the transition metal compounds and the cocatalyst compound on the carrier may be an aliphatic hydrocarbon-based solvent, an aromatic hydrocarbon-based solvent, a halogenated aliphatic hydrocarbon-based solvent, or a combination thereof. Here, non-limiting examples of the aliphatic hydrocarbon-based solvent include pentane, hexane, heptane, octane, nonane, decane, undecane, dodecane, and the like. In addition, non-limiting examples of the aromatic hydrocarbon-based solvent include benzene, monochlorobenzene, dichlorobenzene, trichlorobenzene, toluene, and the like. In addition, non-limiting examples of the halogenated aliphatic hydrocarbon-based solvent include dichloromethane, trichloromethane, dichloroethane, trichloroethane, and the like.

In addition, a process of supporting the main catalyst, the cocatalyst, and the aromatic compound on the carrier may be carried out at a temperature of -70 °C or more and 200 °C or less, and specifically, it is advantageous in terms of the efficiency of supporting the compounds on the carrier that the process is carried out at a temperature of-50 °C or more and 150 °C or less or at a temperature of 0 °C or more and 100 °C or less.

Another aspect of the present invention provides a method of producing a polyolefin, which includes carrying out an olefin polymerization reaction in the presence of the supported catalyst.

The olefin monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicocene, norbornene, norbornadiene, ethylidene norbornene, phenylnorbornene, vinylnorbornene, dicyclopentadiene, 1,4-butadiene, 1,5-pentadiene, 1,6-hexadiene, styrene, alpha-methylstyrene, divinylbenzene, 3-chloromethylstyrene, or a combination thereof.

The polymerization of the olefin monomer may be carried out in a phase selected from among a slurry phase, a solution phase, a gas phase, or a bulk phase. When the polymerization reaction is carried out in a solution phase or a slurry phase, a solvent or an olefin monomer itself may be used as a medium.

A solvent usable in the polymerization reaction may be: an aliphatic hydrocarbon solvent such as butane, isobutane, pentane, hexane, heptane, octane, nonane, decane, undecane, dodecane, cyclopentane, methylcyclopentane, cyclohexane, or the like; an aromatic hydrocarbon solvent such as benzene, monochlorobenzene, dichlorobenzene, trichlorobenzene, toluene, xylene, chlorobenzene, or the like; a halogenated aliphatic hydrocarbon solvent such as dichloromethane, trichloromethane, chloroethane, dichloroethane, trichloroethane, 1,2-dichloroethane, or the like; or a combination thereof.

In this case, the usage amount of the supported catalyst can be determined within a range in which a polymerization reaction of monomers can sufficiently occur in a slurry-, solution-, gas-, or bulk phase process, and thus is not particularly limited. However, in consideration of the activity of the supported catalyst, the addition amount of the supported catalyst may be 10⁻⁸ mol/L or more and 1 mol/L or less, and specifically 10⁻⁷ mol/L or more and 10⁻¹ mol/L or less, or 10⁻⁷ mol/L or more and 10⁻² mol/L or less, based on the concentration of the central metal (M) of a metallocene compound included in the catalyst per unit volume (L) of an olefin monomer.

The polymerization reaction may be carried out as a batch type reaction, a semi-continuous type reaction, or a continuous type reaction.

In this case, the temperature and pressure conditions for polymerization are not particularly limited and may be determined in consideration of the efficiency of the polymerization reaction according to the types of reaction and reactor to be applied. The polymerization temperature may be 40 °C or more and 150 °C or less, and specifically 60 °C or more and 100 °C or less. The polymerization reaction pressure may be 1 atm or more and 100 atm or less, and specifically 5 atm or more and 50 atm or less.

Hereinafter, the present invention will be described in detail by way of examples.

Except where otherwise indicated, all ligand and catalyst synthesis experiments were performed under a nitrogen atmosphere by using standard Schlenk and glovebox techniques, and all the organic solvents used in reactions were refluxed under sodium metal and benzophenone to remove moisture and were distilled immediately before use. The ¹H-NMR analysis of the synthesized ligand and catalyst was performed at room temperature using Bruker 300 MHz.

n-hexane, which is a polymerization solvent, was used after being passed through a tube filled with molecular sieve 5A and activated alumina and being subjected to bubbling with high-purity nitrogen to sufficiently remove moisture, oxygen, and miscellaneous types of catalyst poison. All polymerization reactions were carried out, in an autoclave that was completely isolated from the outside atmosphere, after injecting the required amounts of solvent, cocatalyst, monomers to be polymerized, and the like and adding a catalyst. An obtained polymer was analyzed as follows.

### Preparation Example 1: Synthesis of transition metal compound (tetramethylcyclopentadienyl dimethylsilyl 2-methyl-4-(4-t-butylphenyl)indenylzirconium dichloride)

### [Step 1: Synthesis of dimethyl tetramethylcyclopentadienyl chlorosilane]

After inputting 600 ml of tetrahydrofuran and 50 g of tetramethylcyclopentadiene into a 2 L flask and slowly adding 170 ml of n-butyllithium (n-BuLi, 2.5 M solution in hexane) dropwise under the conditions of a nitrogen atmosphere and a temperature of -10 °C, a reaction was carried out at room temperature for 12 hours while stirring, and thus a reaction solution was obtained. After lowering the temperature of the reaction solution back to -10 °C and then adding 170 g of dimethyl dichlorosilane, a reaction was carried out at room temperature for 12 hours while stirring, and as a result of subsequently drying the resultant under vacuum, a solid reaction product was obtained. The solid reaction product was dissolved by adding 500 ml of n-hexane and then filtered through a Celite filter, and the filtered solution was dried under vacuum, and thereby 70 g of dimethyl tetramethylcyclopentadienyl chlorosilane in a yellow oil form was obtained (yield: 80%).
¹H-NMR(300 MHz, CDCl₃) δ 0.235(s, 6H), 1.81(s, 6H), 1.97(s, 6H), 3.07(s, 1H)

### [Step 2: Synthesis of dimethyl tetramethylcyclopentadienyl 2-methyl-4-(4-t-butylphenyl)indenyl silane]

After lowering the temperature of a flask containing 200 ml of toluene, 40 ml of tetrahydrofuran, and 50 g of 2-methyl-4-(4-t-butylphenyl)indene to -10 °C, 76 ml of n-BuLi (2.5 M solution in hexane) was slowly added dropwise to the flask, and as a result of subsequently stirring at room temperature for 12 hours, a reaction solution was obtained. After lowering the temperature of the reaction solution back to -10 °C, 38 g of dimethyl tetramethylcyclopentadienyl chlorosilane synthesized in Step 1 was added, and a reaction was carried out at room temperature for 12 hours while stirring. When the reaction was completed, 400 ml of water was added and again stirred at room temperature for 1.5 hours, and as a result of extracting with toluene and drying under vacuum, 80 g of dimethyl tetramethylcyclopentadienyl 2-methyl-4-(4-t-butylphenyl)indenyl silane was obtained (yield: 95%).
¹H-NMR(300 MHz, CDCl₃) δ 0.2-0.23(d, 6H), 1.44(s, 9H), 1.91(s, 6H), 2.05-2.08(d, 6H), 2.29(s, 3H), 2.41(s, 1H), 3.76(s, 1H), 6.87(s, 1H)

### [Step 3: Synthesis of tetramethylcyclopentadienyl dimethylsilyl 2-methyl-4-(4-t-butylphenyl)indenylzirconium dichloride]

After inputting 50 g of the dimethyl tetramethylcyclopentadienyl 2-methyl-4-(4-t-butylphenyl)indenyl silane synthesized in Step 2, 300 ml of toluene, and 100 ml of diethyl ether into a flask and lowering the temperature of to -10 °C, 90 ml of n-BuLi (2.5 M solution in hexane) was slowly added dropwise. After the dropwise addition was completed, a reaction temperature was raised to room temperature and stirring was performed for 48 hours, and subsequently, filtration was performed. As a result of drying the obtained filtrate under vacuum, 40 g of a solid tetramethylcyclopentadienyl dimethylsilyl 2-methyl-4-(4-t-butylphenyl)indenyl dilithium salt was obtained (yield: 80%), and the salt was used in a subsequent reaction without purification.

40 g of the tetramethylcyclopentadienyl dimethylsilyl 2-methyl-4-(4-t-butylphenyl)indenyl dilithium salt, 40 ml of toluene, and 10 ml of ether were input into Flask #1 and stirred. In Flask #2, a mixture of 30 ml of toluene and 20 g of ZrCl₄ was prepared. The mixture solution of Flask #2 was slowly added dropwise to Flask #1 using a cannula and then stirred at room temperature for 24 hours. After stirring was completed, the resultant was dried under vacuum, extracted with 500 ml of methylene chloride, and filtered through a Celite filter, and the filtrate was dried under vacuum. A solid obtained by vacuum-drying was washed with 50 ml of a mixture of methylene chloride and n-hexane (volume ratio=1:3) and then dried under vacuum, and thereby 32 g of tetramethylcyclopentadienyl dimethylsilyl 2-methyl-4-(4-t-butylphenyl)indenyl zirconium dichloride (hereinafter referred to as "Transition metal compound-1") in a yellow solid form was obtained (yield: 60%). The chemical formula of Transition metal compound-1 is as follows. 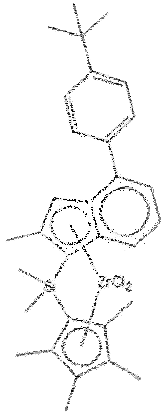 ¹H-NMR(300 MHz, CDCl₃) δ 1.09(s, 3H), 1.202(s, 3H), 1.346(s, 9H), 1.887-1.911(d, 6H), 1.989(s, 3H), 2.075(s, 3H), 2.278(s, 3H), 7.0-7.628(m, 8H)

### Preparation Example 2: Preparation of supported catalyst

2.0 g of silica (manufacturer: W. R. Grace & Co.-Conn., product name: XPO-2412) fired at 600 °C was input in a Schlenk flask (100 ml) in a glovebox, and 10 ml of an anhydrous toluene solution was added to obtain a silica dispersion.

Subsequently, a mixed solution prepared by mixing a solution containing 1.2 mmol of trimethylaluminum and 1 mmol of tetrafluorohydroquinone in 5 ml of toluene with 10.2 ml of methylaluminoxane (as a 10 wt% methylaluminoxane solution in toluene; 15 mmol based on the amount of Al; manufacturer: W. R. Grace & Co.-Conn.) was slowly added dropwise to the above-described silica dispersion under the condition of 10 °C and then reacted at 0 °C for about one hour while stirring. After the reaction was completed, the obtained reaction product was heated to 70 °C and stirred for three hours, and cooled to 25 °C. The obtained reaction product, which has been cooled, is referred to as "Reaction product-1."

Separately, 100 µmol of the synthesized Transition metal compound-1 was input into another 100 ml Schlenk flask in a glovebox, and after taking the flask out of the glovebox, 10 ml of an anhydrous toluene solution was added.

Subsequently, the solution containing Transition metal compound-1 was slowly added to Reaction product-1 at 10 °C, heated to 70 °C and stirred for one hour, and then cooled to 25 °C and stirred for two hours. Subsequently, the obtained reaction product was washed with a sufficient amount of toluene and hexane to remove an unreacted aluminum compound. Subsequently, the resultant was dried under vacuum, and thereby Supported catalyst-1 was obtained.

### Preparation Examples 3 to 7: Preparation of supported catalyst

Supported catalysts were prepared in the same manner as in Preparation Example 2 except that aromatic compounds shown in Table 1 below were used instead of tetrafluorohydroquinone. The supported catalysts obtained according to Preparation Examples 3 to 7 are named as shown in Table 1 below.

### Preparation Example 8: Preparation of supported catalyst

A supported catalyst was prepared in the same manner as in Preparation Example 2 except that trimethylaluminum and tetrafluorohydroquinone were not used. Specifically, the preparation of the supported catalyst was carried out in the same manner as in Preparation Example 2 except that 10.2 ml of methylaluminoxane as is was added dropwise to the silica dispersion. The supported catalyst obtained according to Preparation Example 8 is referred to as "Supported catalyst-7."

**[Table 1]**

| | Aromatic compound | Structural Formula | Supported catalyst |
|---|---|---|---|
| Preparation Example 2 | Tetrafluorohydroquinone | 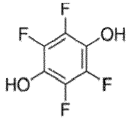 | Supported catalyst-1 |
| Preparation Example 3 | Octafluorobenzidine | 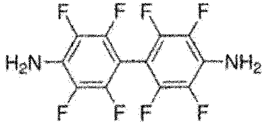 | Supported catalyst-2 |
| Preparation Example 4 | Bisphenol-AF | 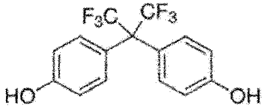 | Supported catalyst-3 |
| Preparation Example 5 | Hydroquinone | 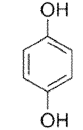 | Supported catalyst-4 |
| Preparation Example 6 | Pentafluorophenol | 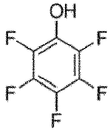 | Supported catalyst-5 |
| Preparation Example 7 | Bisphenol A | 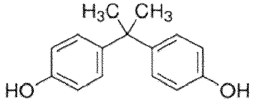 | Supported catalyst-6 |
| Preparation Example 8 | - | - | Supported catalyst-7 |

### Example 1: Preparation of polypropylene resin

At room temperature, the interior of a stainless steel autoclave (high-presssure reactor) having an internal capacity of 2 L was completely substituted with nitrogen. After injecting 2 ml of triisobutylaluminum (as a 1 M solution in hexane) and 500 g of propylene into the reactor while maintaining nitrogen purging, a dispersion prepared by dispersing 50 mg of Supported catalyst-1 in 5 ml of hexane was added into the reactor using high-pressure nitrogen. Subsequently, polymerization was carried out at 70 °C for 60 minutes. After polymerization was completed, the reactor was cooled to room temperature, and as a result of subsequently removing unreacted propylene through a discharge line, a white powdery solid was obtained. The obtained white powdery solid was dried for 15 hours or more while heating to 80 °C using a vacuum oven, and thereby a final polypropylene resin was obtained.

### Examples 2 and 3 and Comparative Examples 1 to 4: Preparation of polypropylene resin

Polypropylene resins were prepared in the same manner as in Example 1 except that supported catalysts shown in Table 2 below were used instead of Supported catalyst-1.

### <Evaluation methods>

### 1. Zr and Al contents

The zirconium (Zr) and aluminum (Al) contents of the supported catalysts used in Examples 1 to 3 and Comparative Examples 1 to 4 were analyzed using an inductively coupled plasma-atomic emission spectrometer (ICP-AES) commercially available from SPECTRO ARCOS.

### 2. Activity

After measuring the weight (kg) of a polymer produced for one hour per weight (g) of a catalyst used, catalytic activity was calculated according to Mathematical Formula 1.

Activity (kg/gCat.hr) = Amount of polypropylene produced (kg/hr) / Amount of catalyst (g)

### 3. Generation of fine powder

A sensory evaluation of the polypropylene resins prepared according to Examples 1 to 3 and Comparative Examples 1 to 4 was performed. Specifically, a reactor wall or polypropylene particles (in a granular form) were touched with a hand after completion of polymerization, and when powder was adhered to the hand, it was evaluated that fine powder was generated, and when powder was not adhered to the hand, it was evaluated that fine powder was not generated.

**[Table 2]**

| | Supported catalyst | Zr(%) | Al(%) | Activity (kg/gCat.hr) | Generation of fine powder |
|---|---|---|---|---|---|
| Example 1 | Supported catalyst-1 | 0.29 | 14.6 | 11.4 | × |
| Example 2 | Supported catalyst-2 | 0.28 | 14.9 | 11.9 | × |
| Example 3 | Supported catalyst-3 | 0.29 | 15.0 | 9.7 | × |
| Comparative Example 1 | Supported catalyst-4 | 0.30 | 15.0 | 5.4 | × |
| Comparative Example 2 | Supported catalyst-5 | 0.29 | 14.8 | 7.8 | ○ |
| Comparative Example 3 | Supported catalyst-6 | 0.29 | 14.8 | 5.6 | × |
| Comparative Example 4 | Supported catalyst-7 | 0.29 | 14.7 | 3.8 | ○ |

Referring to Table 2, it can be seen that the supported catalysts used in Examples 1 to 3 of the present invention had higher activity than the supported catalysts used in Comparative Examples 1 to 4 despite having similar Zr and Al contents.

In addition, according to Examples 1 to 3 of the present invention, since fine powder was not generated during the production of polypropylene, it can be seen that the fouling problem caused thereby was improved. On the other hand, in the case of Comparative Example 2 in which a supported catalyst including an aromatic compound including only one bonded -OH polar group was used and Comparative Example 4 in which a supported catalyst not including an aromatic compound was used, fine powder was generated during olefin polymerization, and thus a fouling problem occurred.

As described above, although the present invention has been described through a limited number of exemplary embodiments and drawings, the present invention is not limited thereto, and it goes without saying that various modifications and changes can be made by those of ordinary skill in the art to which the present invention pertains within the scope of the technical spirit of the present invention and the scope of the claims to be described below and equivalents thereof.

## Claims

1. A supported catalyst for olefin polymerization, comprising:
a main catalyst including a metallocene-based compound;
a cocatalyst including an organic aluminum-based compound;
an aromatic compound in which two or more polar groups selected from among a hydroxyl group (-OH), an amine group (-NH₂), a thiol group (-SH), a carboxyl group (-COOH), and an amide group (-CONH₂) and one or more halogen groups are bonded; and
a carrier configured to support the main catalyst, the cocatalyst, and the aromatic compound.

2. The supported catalyst of claim 1, wherein the aromatic compound includes one or more compounds represented by Chemical Formulas 1 to 3 below: 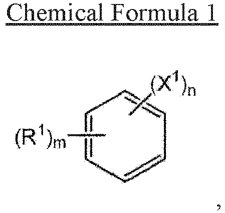 wherein, in Chemical Formula 1,
n is an integer of 2 or more,
m is an integer of 1 or more,
X¹s are the same or different, and are each independently: a hydroxyl group (-OH); an amine group (-NH₂); a thiol group (-SH); a carboxyl group (-COOH); or an amide group (-CONH₂), and
one or more selected from among R¹s are halogen groups, and the remaining R¹s are the same or different and are each independently: hydrogen; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group, 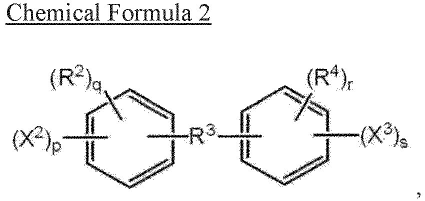
wherein, in Chemical Formula 2,
each of p, q, r, and s is an integer of 1 or more,
X²s and X³s are the same or different, and are each independently: a hydroxyl group (-OH); an amine group (-NH₂); a thiol group (-SH); a carboxyl group (-COOH); or an amide group (-CONH₂),
one or more selected from among R²s and R⁴s are halogen groups, and the remaining R²s and R⁴s are the same or different, and are each independently: hydrogen; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group, and
R³ is: a direct linkage; or an unsubstituted or substituted alkylene group, 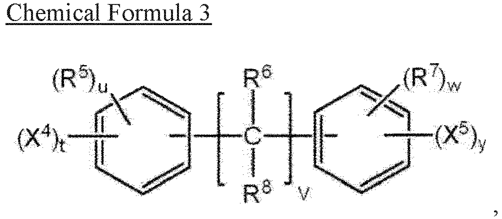
wherein, in Chemical Formula 3,
each of t, u, v, w, and y is an integer of 1 or more,
X⁴s and X⁵s are the same or different, and are each independently: a hydroxyl group (-OH); an amine group (-NH₂); a thiol group (-SH); a carboxyl group (-COOH); or an amide group (-CONH₂),
R⁵s and R⁷s are the same or different, and are each independently: hydrogen; a halogen group; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group, and
one or more selected from among R⁶s and R⁸s are: a halogen group; or a linear or branched (C₁-C₂₀) alkyl group substituted with one or more halogen groups, and the remaining R⁶s and R⁸s are: hydrogen; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group.

3. The supported catalyst of claim 2, wherein the one or more selected from among R¹s is fluorine (F), the one or more selected from among R²s and R⁴s is fluorine (F), and the one or more selected from among R⁶s and R⁸s is fluorine (F).

4. The supported catalyst of claim 1, wherein the aromatic compound includes one or more compounds represented by Chemical Formulas 4 to 6 below:

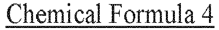

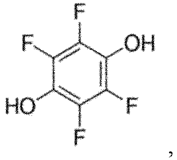

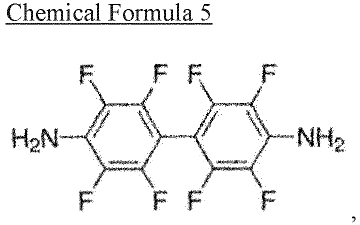

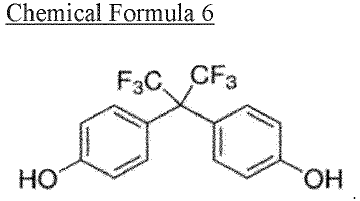

5. The supported catalyst of claim 1, wherein the cocatalyst includes one or more among:
a compound including a unit represented by Chemical Formula 7 below; and
a compound represented by Chemical Formula 8 below,
Chemical Formula 7 **-[Al(Ra)-O]_{b}-**
wherein, in Chemical Formula 7,
b is an integer of 2 or more,
Al is aluminum,
O is oxygen, and
Ra is: a halogen group; or a (C₁-C₂₀) hydrocarbyl group unsubstituted or substituted with a halogen group,
Chemical Formula 8 Q(Rb)₃,
wherein, in Chemical Formula 8,
Q is: aluminum; or boron, and
Rbs are the same or different, and are each independently: a halogen group; or a (C₁-C₂₀) hydrocarbyl group unsubstituted or substituted with a halogen group.

6. The supported catalyst of claim 1, wherein the cocatalyst includes an alkylaluminoxane and an alkylalumium.

7. The supported catalyst of claim 6, wherein the alkylaluminoxane includes one or more selected from the group consisting of methylaluminoxane, ethylaluminoxane, isobutylaluminoxane, and butylaluminoxane.

8. The supported catalyst of claim 6, wherein the alkylaluminum includes one or more selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide, and dimethylaluminum ethoxide.

9. The supported catalyst of claim 1, wherein the metallocene-based compound is represented by Chemical Formula 9 below: 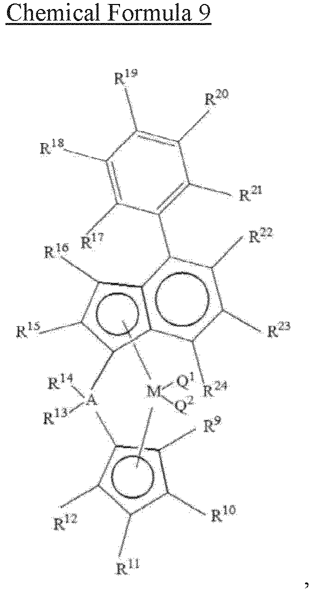 wherein, in Chemical Formula 9,
M is a group 4 transition metal,
Q¹ and Q² are the same or different, and are each independently: a halogen group; a (C₁-C₂₀) alkyl group; a (C₂-C₂₀) alkenyl group; a (C₂-C₂₀) alkynyl group; a (C₆-C₂₀) aryl group; a (C₁-C₂₀) alkyl (C₆-C₂₀) aryl group; a (C₆-C₂₀) aryl (C₁-C₂₀) alkyl group; a (C₁-C₂₀) alkylamido group; a (C₆-C₂₀) arylamido group; or a (C₁-C₂₀) alkylidene group,
A is a group 14 element,
R⁹, R¹⁰, R¹¹, R¹², R¹⁷, R¹⁸, R¹⁹, R²⁰, R²¹, R²², R²³, and R²⁴ are the same or different, and are each independently: hydrogen; a (C₁-C₂₀) alkyl group unsubstituted or substituted with an acetal group or ether group; a (C₂-C₂₀) alkenyl group unsubstituted or substituted with an acetal group or ether group; a (C₁-C₂₀) alkyl (C₆-C₂₀) aryl group unsubstituted or substituted with an acetal group or ether group; a (C₆-C₂₀) aryl (C₁-C₂₀) alkyl group unsubstituted or substituted with an acetal group or ether group; or a (C₁-C₂₀) silyl group unsubstituted or substituted with an acetal group or ether group,
two or more groups among R⁹, R¹⁰, R¹¹, and R¹² form an aliphatic ring or aromatic ring by being bonded to each other,
two or more groups among R¹⁷, R¹⁸, R¹⁹, R²⁰, R²¹, R²², R²³, and R²⁴ form an aliphatic ring or aromatic ring by being bonded to each other, and
R¹³, R¹⁴, R¹⁵, and R¹⁶ are the same or different, and are each independently: hydrogen; a (C₁-C₂₀) alkyl group unsubstituted or substituted with an acetal group or ether group; a (C₂-C₂₀) alkenyl group unsubstituted or substituted with an acetal group or ether group; or a (C₁-C₂₀) alkyl (C₆-C₂₀) aryl group unsubstituted or substituted with an acetal group or ether group.

10. The supported catalyst of claim 9, wherein the A is (C) or silicon (Si), the R¹³ and the R¹⁴ are each independently hydrogen or a methyl group.

11. The supported catalyst of claim 9, wherein the Q¹ and the Q² are each independently:
a halogen group selected from among F, Cl, Br, and I;
a methyl group; or
an ethyl group.

12. A method of producing a polyolefin, comprising carrying out an olefin polymerization reaction in the presence of the supported catalyst of any one of claims 1 to 11.
